# EUROPÄISCHE PATENTSCHRIFT

(11) **EP 3 556 586 B1**
(45) Veröffentlichungstag und Bekanntmachung des Hinweises auf die Patenterteilung: **07.04.2021**
(21) Anmeldenummer: 19169603.8
(22) Anmeldetag: 16.04.2019
(51) Int. Cl.: B60H 1/00, B60H 1/24

(54) **DACHSTRUKTUR UND KABINE**
ROOF STRUCTURE AND CABIN
STRUCTURE DE TOIT ET CABINE

(30) Priorität: 20.04.2018 DE 102018206111
(43) Veröffentlichungstag der Anmeldung: 23.10.2019
(73) Patentinhaber: Deere & Company, Moline, IL 61265 (US)
(72) Erfinder: Mukhopadhyay, Sourabh, 68163 Mannheim (DE); Halder, Kaushik, 68163 Mannheim (DE); Singh, Amar, 68163 Mannheim (DE); Varma, Rajashekar, 68163 Mannheim (DE); Jha, Pankaj Kumar, 68163 Mannheim (DE); Chow, Augustine Y, 68163 Mannheim (DE); Dietrich, Gunnar, 68163 Mannheim (DE); Kumar, Anand K, 68163 Mannheim (DE); Basak, Saurav, 68163 Mannheim (DE); Jordan, Benjamin, 68163 Mannheim (DE)
(74) Vertreter: Stein, Stefan

(56) Entgegenhaltungen:
- EP-A1- 0 733 503
- EP-A1- 3 176 058
- JP-B2- 3 579 279
- US-A1- 2004 144 850

## Beschreibung

Die Erfindung betrifft eine Dachstruktur gemäss dem Oberbegriff des unabhängigen Anspruchs 1 und eine Kabine gemäss dem Oberbegriff des unabhängigen Anspruchs 11.

Beim Einsatz eines landwirtschaftlichen Fahrzeugs, beispielsweise einer selbstfahrenden Feldspritze oder eines Traktors mit angehängtem oder angebauten Spritzgerät, kommen beim Spritzen auf dem Feld oftmals chemische Substanzen, insbesondere chemischer Pflanzenschutzmittel wie Pestizide, Herbizide oder Fungizide, zum Einsatz. Dadurch kann die Aussenumgebung, insbesondere auch die Umgebungsluft, mit Verschmutzungen belastet sein, beispielsweise mit Staub, Aerosolen und chemischen Dämpfen und Gasen, insbesondere auch den chemischen Substanzen. Um den Fahrer in der Kabine gegen derartige Verschmutzungen zu schützen, ist es bekannt, die Kabine mit einem Filterelement, beispielsweise einem Filter, zu versehen, welches die aus der Aussenumgebung angesaugte Luft filtert bzw. reinigt und die gefilterte Luft in das Innere der Kabine abgibt. Die Norm EN15695 zum Schutz des Fahrers von landwirtschaftlichen Fahrzeugen sieht hierzu verschiedene Kategorien für Kabinen vor, sodass je nach Kabinenkategorie bestimmte Vorgaben erfüllt werden müssen. Eine Kabine der Kategorie 4 (CAT IV), welche eine Kabine mit hohen Anforderungen an die Luftreinheit beschreibt, muss beispielsweise derart ausgebildet sein, dass Verschmutzungen aus der Aussenumgebung nicht in das Innere einer Dachstruktur und/oder Kabine gelangen dürfen. Darüber hinaus werden landwirtschaftliche Fahrzeuge oft bei für den Fahrer unangenehmen warmen oder kalten Aussentemperaturen eingesetzt, sodass die Luft innerhalb der Kabine nicht nur gefiltert sondern auch klimatisiert werden muss. Aus diesem Grund ist die Kabine auch mit einer Klimaeinrichtung zur Klimatisierung der Luft im Inneren der Kabine versehen, beispielsweise einer Heizung und/oder einer Klimaanlagen-Baugruppe.

Die Filtereinrichtung und/oder die Klimaeinrichtung können insbesondere in der Dachstruktur angeordnet sein.

Im Weiteren ist aus der DE 10 2004 004197 A1 eine zweiteilig ausgebildete Dachstruktur bekannt, welche eine Filtereinrichtung und eine Klimaeinrichtung aufweist. Die zweiteilige Dachstruktur umfasst eine untere und obere Dachbaugruppe, wobei an den peripheren Verbindungsstellen der unteren und oberen Dachbaugruppe, also den der Aussenumgebung zugewandten Verbindungsstellen, ein Dichtmittel vorgesehen ist, beispielsweise ein Dichtmittel, insbesondere ein auf Schaum oder ein auf Kitt basierendes Dichtmittel, um das Eindringen von Verschmutzungen in die Dachstruktur zu verhindern. Derartige zweiteilige Dachstrukturen erfüllen jedoch die Kategorie 4 Anforderungen der EN 15695 nicht, da das Dichtmittel den Innenraum der Dachstruktur und somit auch das Innere der Kabine nicht ausreichend abdichtet. Dadurch können Verschmutzungen aus der Aussenumgebung in die Dachstruktur und somit in das Innere der Kabine gelangen, was dazu führt, dass der Fahrer den schädlichen Verschmutzungen direkt ausgesetzt ist. Es wurde versucht die obigen Nachteile durch eine Dachstruktur zu lösen, welche aus einer einteiligen Dachstruktur besteht, da aufgrund des einteiligen Aufbaus der Dachstruktur im Wesentlichen auf Dichtmittel verzichtet werden kann. Dieser Lösungsansatz ist allerdings nachteilig, da die Montage der Filter- und Klimaeinrichtung, also das Verlegen von Leitungen, Schläuchen und der elektrischen Verkabelung sowie der Einbau der Klimaanlagen-Baugruppe und Filter, sehr aufwändig ist. Im Weiteren ist die Wartung der Filter- und Klimaeinrichtung, beispielsweise die Reparatur einer Leitung oder der Austausch der Klimaanlagen-Baugruppe oder des Filters, bei einer solchen einteiligen Konstruktion nahezu unmöglich. Somit führen die bekannten Lösungsansätze zu höherem Wartungsaufwand und/oder gefährden die Gesundheit des Fahrers. Die EP 3 176 058 A1 offenbart eine Kabine für ein landwirtschaftliches Fahrzeug, mit einer Dachstruktur und einem Luftführungselement.

Ausgehend von diesem Stand der Technik ist es daher eine Aufgabe der vorliegenden Erfindung eine Dachstruktur und eine Kabine vorzuschlagen, welche die aus dem Stand der Technik bekannten Nachteile vermeidet, insbesondere eine Dachstruktur und eine Kabine vorzuschlagen, die das Eindringen von Verschmutzungen in den Innenraum der Dachstruktur und/oder das Innere der Kabine vermeidet und/oder konstruktiv einfach ausgestaltet und/oder eine zu Wartungszwecken vereinfachten Zugänglichkeit aufweist.

Diese Aufgabe wird durch eine Dachstruktur mit den Merkmalen des Anspruchs 1 und eine Kabine mit den Merkmalen des Anspruchs 11 gelöst.

Die abhängigen Ansprüche beziehen sich auf besonders vorteilhafte Ausführungsformen der Erfindung.

Erfindungsgemäss wird eine Dachstruktur für ein landwirtschaftliches Fahrzeug vorgeschlagen. Die Dachstruktur umfasst eine obere Dachbaugruppe und eine untere Dachbaugruppe, wobei die obere Dachbaugruppe mit der unteren Dachbaugruppe lösbar oder fest verbindbar oder verbunden ist, insbesondere die obere Dachbaugruppe an der unteren Dachbaugruppe lösbar befestigbar oder befestigt ist. Die untere Dachbaugruppe und/oder die obere Dachbaugruppe umfassen mindestens eine Belüftungsöffnung zur Zufuhr von klimatisierter Luft, insbesondere aus der Dachstruktur in die Kabine, und eine Zirkulationsöffnung zur Zufuhr von rezirkulierter Luft, insbesondere aus der Kabine in die Dachstruktur. Die klimatisierte Luft kann hierbei ein Gemisch aus rezirkulierter Luft und/oder Frischluft sein. Die Dachstruktur umfasst weiter ein Luftführungselement. Das Luftführungselement ist derart zwischen, insbesondere in, der unteren und oberen Dachbaugruppe und an der Zirkulationsöffnung und an der Belüftungsöffnung angeordnet, dass ein gegenüber einer Außenumgebung abgedichteter Bereich ausgebildet ist, da das Luftführungselement als ein gegenüber einer Außenumgebung abgedichteter Bereich ausgebildet ist.

Das landwirtschaftliche Fahrzeug kann eine landwirtschaftliche Zugmaschine oder Erntemaschine, im Speziellen ein Traktor oder Schlepper oder eine selbstfahrende Feldspritze oder dergleichen sein. Anstatt eines landwirtschaftlichen Fahrzeugs kann die Dachstruktur oder Kabine aber auch für eine Baumaschine sein, beispielsweise einen Bagger oder dergleichen. Unter einem abgedichteten Bereich kann im Folgenden ein Bereich innerhalb der Dachstruktur verstanden werden, der gegenüber der Aussenumgebung, also gegenüber Bereichen innerhalb und ausserhalb der Dachstruktur, abgedichtet ist und in welchen keine Verschmutzungen aus der Aussenumgebung eindringen können. Die Außenumgebung kann beispielsweise der Bereich bzw. Raum ausserhalb der Dachstruktur und/oder ein Innenraum der Dachstruktur sein. Der abgedichtete Bereich kann also vom Luftführungselement selbst ausgebildet sein, insbesondere durch die Anordnung des Luftführungselements in und die Verbindung des Luftführungselements mit der Dachstruktur.

Die untere Dachbaugruppe und/oder die obere Dachbaugruppe können aus Kunststoff und/oder aus Metall ausgebildet sein, bevorzugt aus einem Kompositematerial, besonders bevorzugt aus einem duroplastischen bzw. wärmeaushärtenden Kompositematerial. Im Weiteren können die untere und/oder obere Dachbaugruppe ein Formteil und/oder ein rotationsgeformtes Teil und/oder ein blasgeformtes Teil aufweisen, oder aber ein Formteil und/oder ein rotationsgeformtes Teil und/oder ein blasgeformtes Teil sein. Ebenso können die untere und/oder obere Dachbaugruppe mittels eines Formpress- und/oder Rotoformverfahrens, beispielsweise Rotationssinterverfahren oder Rotationsschmelzverfahren oder Rotationsguss, und/oder Spritzblasformen, Doppelschicht Thermoformen oder 3D Druck hergestellt sein.

Das Luftführungselement kann lösbar oder fest mit der unteren und/oder oberen Dachbaugruppe verbunden sein, insbesondere lösbar oder fest an oder in der unteren und/oder oberen Dachbaugruppe befestigt sein. Ebenso kann das Luftführungselement mit der Zirkulationsöffnung und/oder der Belüftungsöffnung lösbar oder fest verbunden oder befestigt sein und/oder die Verbindungsstellen können abgedichtet sein. Auch kann das Luftführungselement mit der Zirkulationsöffnung und/oder der Belüftungsöffnung strömungsverbunden sein. Die Belüftungsöffnung und/oder die Zirkulationsöffnung können insbesondere in der unteren und/oder oberen Dachbaugruppe ausgebildet sein. Dabei kann die Belüftungsöffnung einen Luftschlitz oder ein Luftgitter aufweisen, mit welchem die Menge und die Richtung einer Luftströmung in die Kabine genaue und/oder bedarfsgerecht eingestellt werden kann.

Die obere Dachbaugruppe kann das gleiche periphere Profil wie die untere Dachbaugruppe aufweisen, sodass die obere Dachbaugruppe komplementär an die untere Dachbaugruppe angepasst bzw. ausgeformt werden kann, um das Luftführungselement zu umschließen und/oder abzudecken. Das Luftführungselement wiederum kann den abgedichteten Bereich ausbilden. Darüber hinaus kann die untere und/oder obere Dachbaugruppe entfernbare Zugangsverkleidung umfassen, beispielsweise in Form eines Blechs ausgebildet, um eine Wartung bzw. Instandsetzung der Komponenten in der Dachstruktur, insbesondere der Klimaeinrichtung zu ermöglichen. Unter Umständen kann es erforderlich sein in der Dachstruktur ein Dichtmittel oder ein Isolationsmaterial zwischen den oberen und unteren Dachbaugruppen vorzusehen. Zusätzlich kann an den äusseren Verbindungsstellen der unteren und oberen Dachbaugruppe eine Dichtung, insbesondere ein Dichtmittel oder Kitt, verwendet werden, um die zusammengesetzte Dachstruktur wasserdicht auszugestalten. Eine Schaumstoffdichtung bzw. -isolierung kann zum Abdichten zwischen den Dachbaugruppen vorgesehen sein. Die obere und untere Dachbaugruppe können ausserdem mit Befestigungsmitteln oder mit Klebemitteln aneinander befestigt sein.

Wesentlich für die Erfindung ist, dass aufgrund der Anordnung des Luftführungselements in der Dachstruktur und mittels des Luftführungselements selbst, in der Dachstruktur ein gegenüber der Aussenumgebung abgedichteter Bereich ausgebildet ist. In den abgedichteten Bereich gelangen keine Verschmutzungen aus der Aussenumgebung, insbesondere keine Verschmutzungen aus der Umgebungsluft. Aufgrund des abgedichteten Bereichs wird die über die Zirkulationsöffnung aus der Kabine zugeführte rezirkulierter Luft frei von Verschmutzungen aus der Aussenumgebung gehalten. Somit kann verhindert werden, dass Verschmutzungen an den äusseren Verbindungsstellen der unteren und oberen Dachbaugruppe, insbesondere wenn das Dichtmittel eine Leckage aufweist, in die Dachstruktur bzw. das Luftführungselement und in den Luftkreislauf, also den luftführenden Bereich, eindringen und somit über die Klimakammer und/oder Auslasskammer in die Kabine gelangen. Auf diese Weise wird gewährleistet, dass der Fahrer im Inneren der Kabine nicht direkt schädlichen Verschmutzungen ausgesetzt ist und die Gesundheit des Fahrers durch das Einatmen ungefilterter und mit schädlichen Verschmutzungen behafteter Umgebungsluft nicht gefährdet wird. Darüber hinaus wird aufgrund der einfachen konstruktiven Anordnung des Luftführungselements in der Dachstruktur und der einfachen Ausgestaltung der Dachstruktur weiterhin ein einfacher Zugang zu den in der Dachstruktur angeordneten und/oder anordenbaren Einrichtungen und Bauteilen gewährleistet. Somit können Wartungsarbeiten an der Dachstruktur auf einfache Art und Weise durchgeführt werden, und gleichzeitig die Kategorie 4 Anforderungen der EN 15695 erfüllt werden.

In Ausgestaltung der Erfindung umfasst das Luftführungselement eine Klimakammer, insbesondere zur Führung von klimatisierter Luft, und eine Einlasskammer, insbesondere zur Führung von Frischluft und/oder zur Führung von rezirkulierter Luft, und eine Auslasskammer, insbesondere zur Führung und/oder Zufuhr von klimatisierter Luft in die Kabine, umfasst. Die Klimakammer ist zwischen der Einlasskammer und der Auslasskammer angeordnet. Die Einlasskammer und die Auslasskammer sind als voneinander getrennte Kammern ausgebildet. Mit anderen Worten, die Klimakammer kann derart zwischen der Einlasskammer und der Auslasskammer angeordnet sein, dass die Einlasskammer und die Auslasskammer als voneinander getrennte Kammern ausgebildet sind. Die Klimakammer kann also mit der Einlasskammer und der Auslasskammer strömungsverbunden sein, wohingegen die Einlasskammer und Auslasskammer jeweils nur mit der Klimakammer strömungsverbunden sein können. Das Luftführungselement kann als ein geschlossener Kanal oder als ein röhrenförmiger Körper, insbesondere mit den genannten Kammern, ausgebildet sein, und/oder eine U-Form aufweisen. Die Form und/oder der Querschnitt des Luftführungselements können an die Geometrie der unteren Dachbaugruppe und/oder der oberen Dachbaugruppe und/oder die Frischluftöffnung und/oder Zirkulationsöffnungen angepasst sein. Das Luftführungselement kann einstückig oder zweistückig oder mehrstückig sein. Im Speziellen kann das einstückige Luftführungselement also ein einteilige Bauteil sein oder das zweistückige Luftführungselement ein zweiteilige Bauteil oder das mehrstückige Luftführungselement ein mehrteiliges Bauteil sein. Im Speziellen kann das zweistückige Luftführungselement ein oberes und unteres Luftführungsstück sein, wobei das obere Luftführungsstück in der oberen Dachbaugruppe und das unter Luftführungsstück in der unteren Dachbaugruppe angeordnet sein kann. Dabei werden das obere und untere Luftführungsstück beim Verbinden oder Befestigen der oberen und unteren Dachbaugruppe vorteilhafterweise aufeinander gepresst und dichten so das Luftführungselement ab. Das zweistückige Luftführungselement kann aber auch ein erstes und zweites Luftführungsstück umfassen. Das erste Luftführungsstück kann die Einlasskammer und/oder zumindest teilweise oder ganz die Klimakammer umfassen und das zweite Luftführungsstück kann die Auslasskammer und/oder zumindest teilweise die Klimakammer umfassen. Das erste Luftführungsstück kann aber auch die Einlasskammer und die Klimakammer umfassen und das zweite Luftführungsstück kann nur die Auslasskammer umfassen. Das erste und zweite Luftführungsstück oder das obere und untere Luftführungsstück können miteinander lösbar oder fest verbunden oder aneinander befestigt sein, beispielsweise verschweisst oder verklebt werden. Die Einlasskammer und die Auslasskammer und die Klimakammer können als voneinander räumlich getrennte Kammern ausgebildet sein. Das Luftführungselement kann auch eine weitere Einlasskammern und/oder eine weitere Auslasskammern und/oder eine weitere Klimakammer umfassen.

Im Speziellen können eine erste und zweite Einlasskammer und/oder eine erste und zweite Auslasskammer und/oder eine erste und zweite Klimakammer vorgesehen sein. Die erste und zweite Einlasskammer sowie die erste und zweite Auslasskammer können diametral oder spiegelsymmetrisch zur Klimakammer, insbesondere zur ersten und/oder zweiten Klimakammer, angeordnet sein.

Somit kann vorteilhafterweise ein abgedichteter Bereich mit einer Einlass-, Auslass- und einer Klimakammer innerhalb der Dachstruktur, insbesondere auf konstruktiv einfache Art und Weise, ausgebildet werden. Im Weiteren kann verhindert werden, dass Verschmutzungen in die Dachstruktur eindringen und/oder sogar in die Kabine gelangen.

Gemäß der Erfindung umfassen die untere Dachbaugruppe und/oder die obere Dachbaugruppe eine Frischluftöffnung zur Zufuhr von Frischluft, insbesondere von aussen in die Dachstruktur. Das Luftführungselement ist dabei derart zwischen, insbesondere in, der unteren und oberen Dachbaugruppe und an der Frischluftöffnung und an der Zirkulationsöffnung und an der Belüftungsöffnung angeordnet, dass das Luftführungselement als ein gegenüber einer Außenumgebung abgedichteter Bereich ausgebildet ist. Das Luftführungselement kann an der Frischluftöffnung fest oder lösbar befestigt oder verbunden sein. Auch ist das Luftführungselement mit der der Frischluftöffnung strömungsverbunden. Die Frischluftöffnung und/oder Belüftungsöffnung und/oder die Zirkulationsöffnung können insbesondere in der unteren und/oder oberen Dachbaugruppe ausgebildet sein. Diese Massnahme weist die Vorteile der erfindungsgemässen Dachstruktur auf.

Gemäß der Erfindung weist das Luftführungselement an, insbesondere in, der Einlasskammer und/oder der Klimakammer einen Frischlufteinlass zur Zufuhr von Frischluft in das Luftführungselement und einen Zirkulationseinlass zur Zufuhr von rezirkulierter Luft in das Luftführungselement auf. Ausserdem weist das Luftführungselement an, insbesondere in, der Auslasskammer einen Luftauslass auf, um das klimatisierte Luftgemisch aus Frischluft und rezirkulierter Luft aus dem Luftführungselement in die Kabine zu führen. Dabei ist die Frischluftöffnung mit dem Frischlufteinlass und die Zirkulationsöffnung mit dem Zirkulationseinlass und der Luftauslass mit der Belüftungsöffnung derart verbunden, dass die Frischluft und die rezirkulierte Luft im Luftführungselement mischbar und im Luftführungselement von der Frischluftöffnung und der Zirkulationsöffnung zum Luftauslass führbar sind. Die Frischluftöffnung kann mit dem Frischlufteinlass und die Zirkulationsöffnung kann mit dem Zirkulationseinlass und der Luftauslass mit der Belüftungsöffnung fest oder lösbar verbunden sein, insbesondere aneinander befestigt sein, und/oder die Verbindungsstellen können abgedichtet sein. Im Speziellen kann die Einlasskammer den Frischlufteinlass und den Zirkulationseinlass umfassen. Dabei kann die Klimakammer zusätzlich einen weiteren Frischlufteinlass umfassen. In einem anderen Beispiel kann die Einlasskammer den Zirkulationseinlass und die Klimakammer den Frischlufteinlass umfassen.

Das Luftführungselement kann einen, zwei oder mehrere Frischlufteinlässe und einen, zwei oder mehrere Zirkulationseinlässe aufweisen, insbesondere wenn das Luftführungselement zwei oder mehrere Einlasskammern mit je einer Frischluftöffnungen und/oder einer Zirkulationsöffnungen umfasst und/oder zwei oder mehrere Klimakammern mit je einer Frischluftöffnungen umfasst. Ebenso kann das Luftführungselement zwei oder mehrere Luftauslässe umfassen, insbesondere wenn das Luftführungselement zwei oder mehrere Auslasskammern mit je einem Luftauslass umfasst. Bevorzugt umfasst das Luftführungselement die gleiche Anzahl an Einlasskammern und Auslasskammern. Die zwei oder mehrere Einlasskammern und/oder Auslasskammern können als voneinander räumlich getrennte Kammern im Luftführungselement ausgebildet sein.

Es kann aber auch die weitere Einlasskammer den weiteren Frischlufteinlass und/oder eine weitere Zirkulationsöffnung umfassen. Ebenso kann die Klimakammer einen weiteren Frischlufteinlass umfassen oder die weitere Klimakammer kann den weiteren Frischlufteinlass umfassen. Die Auslasskammer oder die weitere Auslasskammer kann einen weiteren Luftauslass umfassen. Als eine spezielle Massnahme kann die erste Einlasskammer einen ersten Frischlufteinlass und/oder den ersten Zirkulationseinlass umfassen und die zweite Einlasskammer einen zweiten Frischlufteinlass und einen zweiten Zirkulationseinlass umfassen. Gleichzeitig kann die Klimakammer keinen Einlass oder einen dritten Frischlufteinlass umfassen. Als eine weitere spezielle Massnahme kann die erste Einlasskammer einen ersten Zirkulationseinlass und die zweite Einlasskammer einen zweiten Zirkulationseinlass umfassen. Gleichzeitig kann die Klimakammer einen ersten Frischlufteinlass und die zweite Klimakammer den zweiten Frischlufteinlass umfassen. Die Frischluftöffnung kann also mit dem Frischlufteinlass und die Zirkulationsöffnung kann mit dem Zirkulationseinlass und diese beiden wiederum können mit dem Luftauslass in der Auslasskammer kommunizierend in Verbindung stehen, also strömungsverbunden sein. Somit kann die Frischluft dem Luftführungselement über die Frischluftöffnung und den Frischlufteinlass und die rezirkulierte Luft über die Zirkulationsöffnung und den Zirkulationseinlass zugeführt werden. Im Luftführungselement kann die Frischluft und die rezirkulierte Luft in der Einlasskammer und/oder der Klimakammer mischbar und der Auslasskammer zuführbar und von der Auslasskammer mittels des Luftauslasses der Kabine zuführbar sein. Vorteilhafterweise kann somit verhindert werden, dass der Fahrer im Inneren der Kabine schädlichen Verschmutzungen direkt ausgesetzt ist und die Gesundheit des Fahrers durch das Einatmen ungefilterter und mit schädlichen Verschmutzungen behafteter Umgebungsluft nicht gefährdet wird.

In Ausgestaltung der Erfindung ist an der Frischluftöffnung und/oder am Frischlufteinlass eine Filteranordnung, insbesondere mit einem ersten Filterelement und/oder einem ersten Gebläse angeordnet. Die Filteranordnung kann fest oder lösbar dem Frischlufteinlass oder der Frischluftöffnung verbunden, insbesondere befestigt sein. Die Filteranordnung kann eine Leitung und/oder ein erstes Filterelement und/oder eine Halterung mit einem Befestigungselement, um die Filteranordnung, insbesondere das erste Filterelement, zu halten und/oder zu befestigen, und/oder das erste Gebläse umfassen. Das erste Gebläse kann einen ersten Gebläseeinlass und einen ersten Gebläseauslass aufweisen. Der erste Gebläseeinlass kann Frischluft aus dem ersten Filterelement ansaugen und/oder der erste Gebläseauslass kann Luft in die Auslasskammer ausstossen. Das erste Filterelement kann zumindest einen Filter umfassen. Beispielsweise kann die Filteranordnung nur das erste Filterelement umfassen. In diesem Fall kann das erste Filterelement, bevorzugt ein Filter, am Frischlufteinlass und/oder der Frischluftöffnung angeordnet sein, bevorzugt verbunden bzw. gekoppelt sein. Die untere Dachbaugruppe kann dann einen ausgeformten Frischluftkanal umfassen, der vorzugsweise in der äußeren Peripherie der unteren Dachbaugruppe angeordnet sein, also der Fläche, die in Richtung der Kabine ausgerichtet ist. Der Frischluftkanal kann von einer entfernbaren Staubfangvorrichtung und/oder einem Einlassgitter umgeben bzw. abgedeckt sein. Die Frischluftöffnung kann ebenfalls an oder entlang der äußeren Peripherie der unteren Dachbaugruppe angeordnet sein, insbesondere auch vom Frischluftkanal umgeben sein. Das erste Filterelement kann entnehmbar an den Frischluftkanal angepasst sein. Somit kann Frischluft durch das Einlassgitter angesaugt werden und passiert das erste Filterelement bevor sie dem Luftführungselement zuführbar ist. In einem zweiten Beispiel kann die Filteranordnung die Leitung und das erste Filterelement und eine Halterung mit einem Befestigungselement und das erste Gebläse umfassen. In diesem Fall kann die Leitung lösbar mit dem Frischlufteinlass und/oder der Frischluftöffnung verbunden bzw. gekoppelt sein. Ausserdem kann das erste Filterelement ausserhalb der Dachstruktur, beispielsweise an der Kabine angeordnet, insbesondere mittels des Halteelements an der Kabine fest oder lösbar befestigt oder verbunden sein. Auf diese Weise wird gewähreistet, dass das erste Filterelement, insbesondere in den beiden Beispielen, einfach gewechselt werden kann und unnötiger Wartungsaufwand vermieden wird. Vorteilhafterweise kann dadurch, insbesondere im zweiten Beispiel, die Frontfläche des ersten Filterelements und dadurch die Luftströmung in die Dachstruktur bzw. der Druck in der Kabine erhöht werden. Darüber hinaus können so vorteilhafterweise die CAT IV Anforderungen mit nur einem Druckregler erfüllt werden. Ausserdem ist der Motor des ersten Gebläses selbstkühlend und es kann auf weitere Gebläse, insbesondere in der Dachstruktur verzichtet werden, was den Geräuschpegel und die konstruktive Komplexität reduziert.

In Ausgestaltung der Erfindung ist das Luftführungselement aus einem Kunststoff. Insbesondere kann das Luftführungselement ein Schaum aus Kunststoff sein. Der Schaum kann ein Schaum aus Kunststoff sein, bevorzugt expandierter Kunststoff, besonders bevorzugt expandiertes Polypropylen (EPP) oder expandiertes Polyethylen (EPE) oder expandiertes Polystyrol (EPS) oder expandiertes Polyethylenterephthalat (PET) oder ein expandiertes Biopolymer oder Polyurethanschaum (PUR) sein. Das Luftführungselement kann aber auch aus einem Kompositematerial, besonders bevorzugt aus einem duroplastischen bzw. wärmeaushärtenden Kompositematerial sein. Das Luftführungselement kann aber auch aus einem Metall, insbesondere aus einem Schaum aus Metall sein. Im Weiteren kann ein Formteil und/oder ein rotationsgeformtes Teil und/oder ein blasgeformtes Teil ein aufweisen, oder aber ein Formteil und/oder ein rotationsgeformtes Teil und/oder ein blasgeformtes Teil sein. Ebenso kann das Luftführungselement mittels eines Formpress- und/oder Rotoformverfahrens, beispielsweise Rotationssinterverfahren oder Rotationsschmelzverfahren oder Rotationsguss, und/oder Spritzblasformen, Doppelschicht Thermoformen oder 3D Druck hergestellt sein. Vorteilhafterweise kann das Luftführungselement so konstruktiv einfacher und technisch effizienter ausgestaltet sein. Von Vorteil kann das Luftführungselement, insbesondere wenn das Luftführungselement aus Schaum ist, die Querschnittsfläche des Luftführungselements verkleinert werden, sodass der Druck im Luftführungselement erhöht werden kann. Im Speziellen kann die Querschnittsfläche des Luftführungselements in einem Bereich von 7000 bis 9000 mm² (Quadratmillimeter) liegen, insbesondere 8874 mm² (Quadratmillimeter) betragen, und/oder um 30% bis 50%, bevorzugt um 40% reduziert werden. Ausserdem kann der Anteil an rezirkulierter Luft reduziert werden, was zu einer Erhöhung des Drucks in der Kabine führt. Bevorzugt kann der Anteil an rezirkulierter Luft um 10% bis 20%, bevorzugt um 14% reduziert werden. Darüber hinaus kann Luftführungselement vorteilshafterweise an den Verbindungsstellen zur Aussemumgebung, beispielsweise der Frischluftöffnung und dem Frischlufteinlass, als Dichtung eingesetzt werden.

In Ausgestaltung der Erfindung ist an der Zirkulationsöffnung und/oder am Zirkulationseinlass ein zweites Filterelement entfernbar angeordnet. Das zweite Filterelement kann zumindest einen Filter umfassen. Auf diese Weise wird gewähreistet, dass das zweite Filterelement einfach gewechselt werden kann und unnötiger Wartungsaufwand vermieden wird.

In Ausgestaltung der Erfindung sind entweder die Filteranordnung, insbesondere die Leitung, und das Luftführungselement, insbesondere der Frischlufteinlass, oder die Filteranordnung, insbesondere die Leitung, und die Dachstruktur, insbesondere die Frischluftöffnung, mittels eines Kopplungselements verbunden. Die Filteranordnung kann also mittels des Kopplungselements lösbar oder fest mit dem Frischlufteinlass oder der Dachstruktur bzw. der Frischluftöffnung verbunden oder an diesen befestigt sein. Dadurch kann die Frischluft vorteilshafterweise gleichmäßig in die Dachstruktur eingeführt. Ausserdem kann die Rezirkulationszone, als der Bereich im Luftführungselement, in dem Frischluft und rezirkulierte Luft gemischt werden, auf ein Minimum reduziert werden, sodass der Druck in der Kabine vergrössert wird.

In Ausgestaltung der Erfindung umfasst das Luftführungselement einen Kabelkanal. Vorteilhafterweise sind im Kabelkanal eine oder mehrere Verbindungsleitungen, insbesondere Leitungen für die Heizung oder den Wärmetauscher, also Elektro- und/oder Klimaleitungen bzw. -rohre, am Luftführungselement anordenbar. Diese Massnahme verhindert, dass Verbindungsleitungen im abgedichteten Bereich verlaufen und, beispielsweise bei einer Leckage der Verbindungsleitungen, Verschmutzungen in den abgedichteten Bereich gelangen. Darüber hinaus sind die Verbindungsleitungen im Kabelkanal einfach zugänglich und können somit einfach gewartet werden.

In Ausgestaltung der Erfindung ist in der Klimakammer und/oder in der Auslasskammer, also im Luftführungselement, ein zweites Gebläse anordenbar oder angeordnet. In der Dachstruktur ist weiter an, insbesondere in, der Klimakammer und/oder an, insbesondere in, der Auslasskammer eine Klimaanlagen-Baugruppe anordenbar oder angeordnet. Das zweite Gebläse weist dabei einen zweiten Gebläseeinlass und einen zweiten Gebläseauslass auf, wobei der zweite Gebläseeinlass Luft aus der Klimakammer ansaugt und/oder der zweite Gebläseauslass Luft in die Auslasskammer und/oder aus dem Luftführungselement ausstößt. Das zweite Gebläse kann entweder in der Klimakammer oder in der Auslasskammer, insbesondere in einer Gebläseaufnahme in der Klimakammer und/oder in der Auslasskammer angeordnet sein, welche zur Aufnahme und/oder zur Befestigung des zweiten Gebläses ausgebildet ist. Das zweite Gebläse kann entweder in der Auslasskammer oder in der Klimakammer oder auch teilweise in der Klimakammer und der Auslasskammer angeordnet sein. Im Speziellen können im Luftführungselement zwei zweite Gebläse vorgesehen und anordenbar bzw. angeordnet sein, insbesondere in jeweils einer Gebläseaufnahme anordenbar bzw. angeordnet sein. Das Luftführungselement kann einen Klimaauslass in der Klimakammer aufweisen und einen Klimaeinlass in der Klimakammer oder der Auslasskammer aufweisen. Die Klimaanlagen-Baugruppe kann derart am Klimaeinlass und Klimaauslass angeordnet sein, insbesondere mit diesen strömungsverbunden sein, dass das Gemisch aus Frischluft und rezirkulierter Luft aus dem Klimaauslass der Klimakammer in die Klimaanlagen-Baugruppe und aus der Klimaanlagen-Baugruppe in den Klimaeinlass der Klimakammer oder der Auslasskammer geführt werden kann und/oder strömen kann. Im Speziellen kann die Klimaanlagen-Baugruppe zwischen der Klimakammer und der Auslasskammer des Luftführungselements angeordnet sein. In diesem Fall kann die Klimaanlagen-Baugruppe derart am Klimaeinlass und Klimaauslass angeordnet sein, dass das Gemisch aus Frischluft und rezirkulierter Luft aus dem Klimaauslass der Klimakammer in die Klimaanlagen-Baugruppe und aus der Klimaanlagen-Baugruppe in den Klimaeinlass der Auslasskammer geführt werden kann und/oder strömen kann. Die Klimaanlagen-Baugruppe kann einen Wärmetauscher umfassen, insbesondere einen Verdampfer und/oder eine Heizungsbaugruppe oder eine Heizung umfassen, insbesondere Heizungs- und/oder Kühlelemente aufweisen, um sowohl eine Heizfunktion, als auch eine Kühlfunktion zur Verfügung zu stellen. Die Klimaanlagen-Baugruppe kann insbesondere an oder in der Klimakammer, welche zur Aufnahme und/oder zur Befestigung der Klimaanlagen-Baugruppe ausgebildet ist, und an der Auslasskammer angeordnet sein. Vorteilhafterweise kann so ein Unterdruck in der Klimakammer und/oder Auslasskammer erzeugt werden und ein Überdruck in der Dachstruktur und/oder Kabine. Darüber hinaus kann vorteilhafterweise somit die Luft aus dem abgedichteten Bereich direkt an und von der die Klimaanlagen-Baugruppe weg geführt werden.

Die Erfindung betrifft ausserdem eine Kabine für ein landwirtschaftliches Fahrzeug, umfassend eine Dachstruktur nach mindestens einem der Ansprüche 1 bis 10. Die erfindungsgemässe Kabine weist die oben beschriebenen Vorteile der erfindungsgemässen Dachstruktur auf.

In Ausgestaltung der Erfindung umfasst die Kabine mindestens eine Seitenwand und die Dachstruktur mit einer Filteranordnung. Die Filteranordnung kann eine Halterung mit einem Befestigungselement umfassen, und die Halterung kann die Filteranordnung, insbesondere das erste Filterelement, halten und/oder die Filteranordnung ist mittels des Befestigungselements an der Dachstruktur und/oder der Seitenwand befestigbar oder kann befestigt sein.

Die Dachstruktur, insbesondere die zusammengesetzte Dachstruktur, kann als Dach der Kabine verwendet werden. Der Rest der Kabine kann von einem Boden und/oder einer oder mehreren Seitenwänden, im Speziellen auch einem Rahmen gebildet sein. Die Seitenwände können mit der Dachstruktur, bevorzugt mit der unteren Dachbaugruppe, besonders bevorzugt zwischen der Frischluftöffnung und der Zirkulationsöffnung, verbunden und/oder abgedichtet sein. Die Seitenwände können Metall-, Plastik- oder Glaselemente aufweisen, welche mit der Dachstruktur über herkömmliche Mittel verbunden sind.

Insgesamt kann der Verlauf der Luftströmung in der Dachstruktur wie folgt beschrieben werden. Im Luftführungselement ist ein Druckgradient vorhanden, insbesondere Über- und/oder Unterdruck, der vom ersten und/oder zweiten Gebläse erzeugt wird. Die Frischluft, die über die Filteranordnung durch die Frischluftöffnung oder Frischlufteinlass gefiltert in das Luftführungselement ansaugbar ist, und die rezirkulierte Luft, die insbesondere über das zweite Filterelement, durch die Zirkulationsöffnung gefiltert aus der Kabine in das Luftführungselement ansaugbar ist, kann im Luftführungselement gemischt und mittels des Druckgradienten im Luftführungselement, insbesondere im abgedichteten Bereich, in die Klimakammer geführt werden. Die gemischte Luft kann anschliessend die Klimaanlagen-Baugruppe passieren, wo sie entweder erwärmt oder gekühlt wird. Die klimatisierte Luft wird dann unter einer erhöhten Geschwindigkeit in die Klimakammer oder Auslasskammer ausgestossen, von wo aus die klimatisierte Luft über die Belüftungsöffnung in die Kabine geleitet wird.

Weitere vorteilhafte Massnahmen und bevorzugte Ausführungsbeispiele ergeben sich aus den abhängigen Ansprüchen.

Im Folgenden werden die erfindungsgemäße Dachstruktur und die erfindungsgemäße Kabine anhand von Ausführungsbeispielen unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine perspektivische Ansicht eines ersten Ausführungsbeispiels der erfindungsgemässen Dachstruktur an einer erfindungsgemässen Kabine, und
- Fig. 2: eine schematische Darstellung eines zweiten Ausführungsbeispiels der erfindungsgemässen Dachstruktur, und
- Fig. 3: eine schematische Draufsicht der erfindungsgemässen Dachstruktur gemäss Figur 2, und
- Fig. 4: eine perspektivische Darstellung eines dritten Ausführungsbeispiels einer erfindungsgemässen Dachstruktur, und
- Fig. 5: eine perspektivische Ansicht des Kopplungselements, und
- Fig. 6: eine perspektivische Ansicht eines ersten Filterelements.

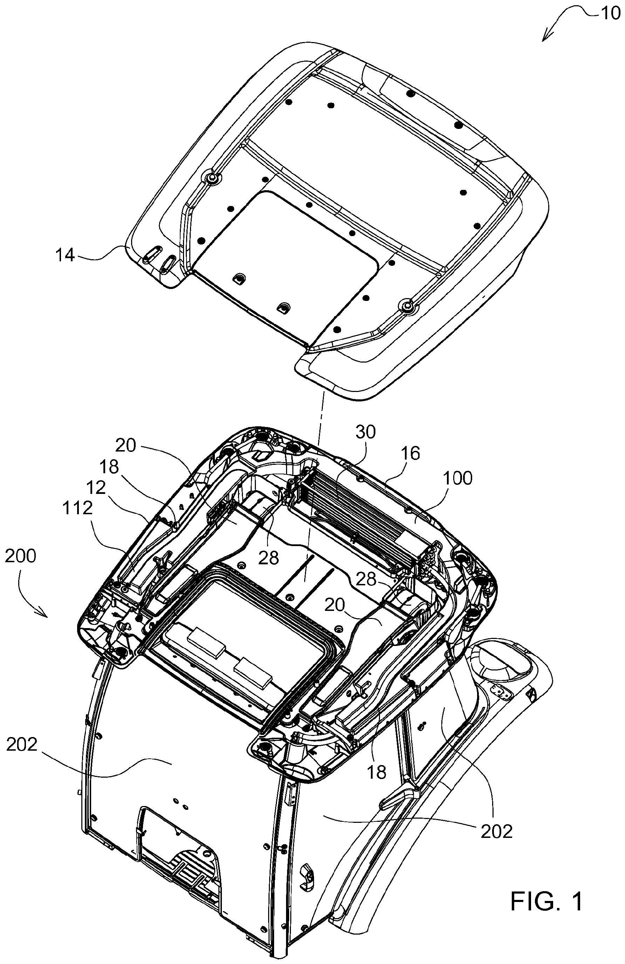

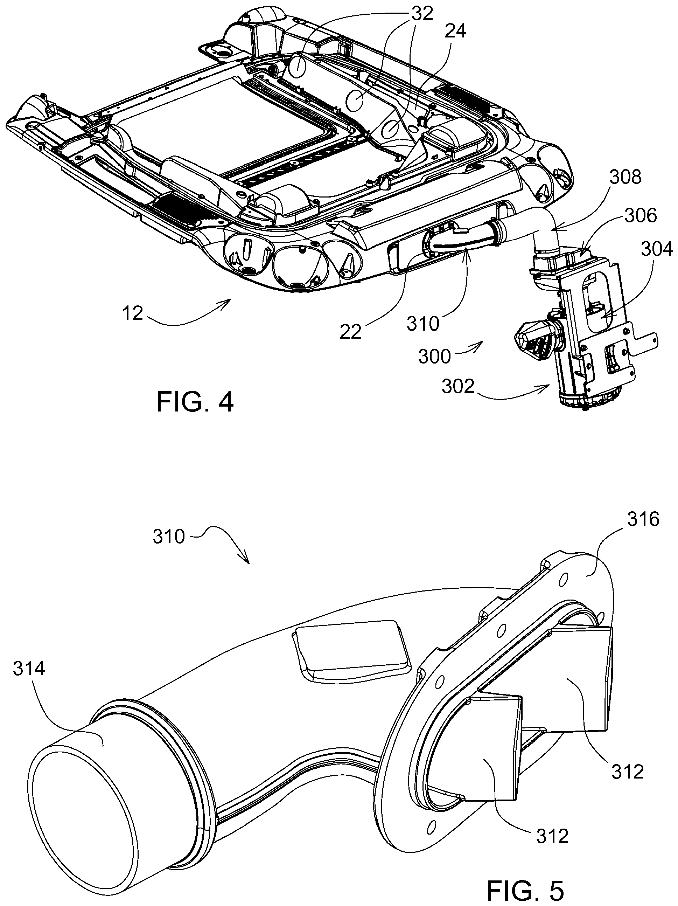

Figur 1 zeigt eine schematische Darstellung eines ersten Ausführungsbeispiels der erfindungsgemässen Dachstruktur 10 für ein landwirtschaftliches Fahrzeug an einer erfindungsgemässen Kabine 200. Die Dachstruktur 10 umfasst eine untere Dachbaugruppe 12 und eine obere Dachbaugruppe 14 und ein Luftführungselement 100. Die obere Dachbaugruppe 14 ist mit der unteren Dachbaugruppe 12 verbindbar, insbesondere kann die obere Dachbaugruppe 14 mit der unteren Dachbaugruppe 12 lösbar oder fest verbindbar oder an der unteren Dachbaugruppe 12 lösbar oder fest befestigbar sein. Die untere Dachbaugruppe 12 und/oder die obere Dachbaugruppe 14 umfasst eine Belüftungsöffnung (Bezugszeichen 32, siehe Figur 4) zur Führung und/oder Abführung von klimatisierter Luft aus der Dachstruktur 10, insbesondere einem Luftführungselement 100, und/oder zur Zufuhr von klimatisierter Luft in die Kabine 200.

Die untere Dachbaugruppe 12 und/oder die obere Dachbaugruppe 14 umfasst eine Zirkulationsöffnung (Bezugszeichen 24, siehe Figur 4) zur Zufuhr von rezirkulierter Luft aus einer Kabine 200 in die Dachstruktur 10, insbesondere in das Luftführungselement 100. Das Luftführungselement 100 ist derart zwischen, insbesondere in, der unteren und oberen Dachbaugruppe 12, 14 und an der Zirkulationsöffnung 24 und an der Belüftungsöffnung 32 angeordnet, dass das Luftführungselement 100 als ein gegenüber einer Außenumgebung abgedichteter Bereich ausgebildet ist. Das Luftführungselement 100 kann also mittels der unteren und oberen Dachbaugruppe 12, 14 umschlossen werden. Das Luftführungselement 100 umfasst zumindest eine Klimakammer 16 und eine Einlasskammer 18 und eine Auslasskammer 20. Die Klimakammer 16 kann zwischen der Einlasskammer 18 und der Auslasskammer 20 angeordnet sein und die Einlasskammer 18 und die Auslasskammer 20 können als voneinander getrennte Kammern ausgebildet sein.

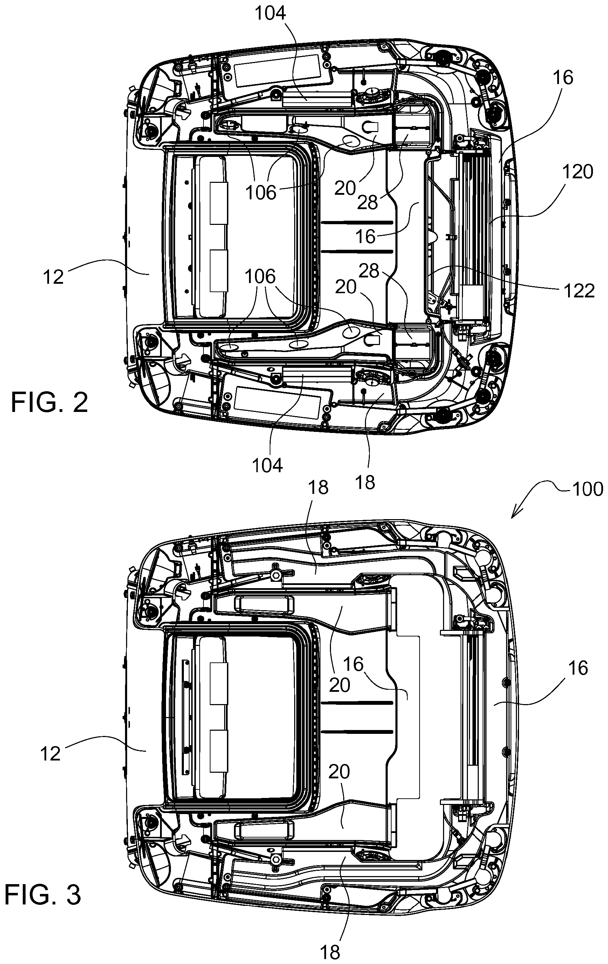

Figur 1 zeigt ein Luftführungselement 100, das zweistückig ausgebildet ist, eine Klimakammer 16, zwei Einlasskammern 18 zur Zufuhr von rezirkulierter Luft und zwei Auslasskammern 20 zur Führung von klimatisierter Luft in die Kabine umfasst. Jede Einlasskammer 18 umfasst eine Zirkulationsöffnung 24 zur Zufuhr von rezirkulierter Luft. Die Klimakammer 16 ist zwischen der Einlasskammer 18 und der Auslasskammer 20 angeordnet, sodass die Einlasskammer 18 und die Auslasskammer 20 als voneinander getrennte Kammern ausgebildet sind. Die Einlasskammer 18 und die Klimakammer 16 sind strömungsverbunden, sodass rezirkulierte Luft von der Einlasskammer 18 in die Klimakammer 16 strömen kann, und die Auslasskammer 20 und die Klimakammer 16 sind strömungsverbunden, sodass rezirkulierte Luft und/oder Frischluft bzw. ein Gemisch aus rezirkulierter Luft und Frischluft von der Einlasskammer 18 in die Klimakammer 16 strömen kann. Die Klimakammer 16 kann ausserdem eine Frischluftöffnung (Bezugszeichen 22, siehe Figuren 2 und 4) zur Zufuhr von Frischluft umfassen. Das Luftführungselement 100 ist dann derart zwischen bzw. in der unteren und oberen Dachbaugruppe 12, 14 und an der Frischluftöffnung 22 und an der Zirkulationsöffnung 24 und an der Belüftungsöffnung 32 angeordnet, dass das Luftführungselement 100 als ein gegenüber einer Außenumgebung abgedichteter Bereich ausgebildet ist.

Das Luftführungselement 100 weist ausserdem einen Kabelkanal 112 auf, in welchem Verbindungsleitungen, also Kabel und/oder Schläuche, angeordnet sind. In der Klimakammer 16 sind ausserdem zwei zweite Gebläse 28 angeordnet, wobei jedes zweite Gebläse 28 einen zweiten Gebläseeinlass und einen zweiten Gebläseauslass aufweist. An der Klimakammer 16, insbesondere in einer Ausnehmung innerhalb der Klimakammer 16, ist eine Klimaanlagen-Baugruppe 30 angeordnet. Der zweite Gebläseeinlass kann im Betriebszustand Luft aus der Klimakammer 16 ansaugen und der zweite Gebläseauslass Luft in die Auslasskammer 20 ausstossen. Das Luftführungselement 100 weist weiter einen Klimaauslass (Bezugszeichen 120, siehe Figur 2) in der Klimakammer 16 und einen Klimaeinlass (Bezugszeichen 122, siehe Figur 2) in der Klimakammer 16 oder der Auslasskammer 20 auf. Die Klimaanlagen-Baugruppe 30 kann derart am Klimaeinlass 120 und Klimaauslass 122 angeordnet sein, insbesondere mit diesen strömungsverbunden sein, dass das Gemisch aus Frischluft und rezirkulierter Luft aus dem Klimaauslass 120 der Klimakammer 16 in die Klimaanlagen-Baugruppe 30 und aus der Klimaanlagen-Baugruppe 30 in den Klimaeinlass 122 der Klimakammer 16 oder der Auslasskammer 20 geführt werden kann und/oder strömen kann. Der Luftauslass (Bezugszeichen 106, siehe Figur 2) ist an der der Auslasskammer 20 des Luftführungselements 100 angeordnet, sodass das klimatisierte Luftgemisch aus gefilterter Frischluft und rezirkulierter Luft aus der Kabine 200 wieder in die Kabine 200 führbar ist.

Fig. 1 zeigt insbesondere weiter eine schematische Darstellung eines ersten Ausführungsbeispiels der erfindungsgemässen Kabine 200 für ein landwirtschaftliches Fahrzeug umfassend eine Dachstruktur 10. Die Kabine 200 umfasst die oben beschriebenen Dachstruktur 10 und Seitenwände 202, hier vier Stück, aus Glas. Die Seitenwände 202 sind an der unteren Dachbaugruppe 12 befestigt bzw. mit dieser lösbar verbunden.

Figur 2 zeigt eine schematische Darstellung eines zweiten Ausführungsbeispiels der erfindungsgemässen Dachstruktur 10, insbesondere der unteren Dachbaugruppe 12 mit einem transparent dargestellten Luftführungselement. Die in Figur 2 gezeigte Dachstruktur 10 entspricht im Wesentlichen der in Figur 1 gezeigten Dachstruktur 10, sodass im Folgenden lediglich auf die Unterschiede eingegangen wird.

Im Allgemeinen weist das Luftführungselement 100 an der Klimakammer 16 einen Frischlufteinlass 102 zur Zufuhr von Frischluft in das Luftführungselement auf. Das Luftführungselement 100 kann aber auch zusätzlich oder nur einen Frischlufteinlass 102 an der Einlasskammer 18 aufweisen. Im Weiteren weist das Luftführungselement 100 an der Einlasskammer 18 einen Zirkulationseinlass 104 zur Zufuhr von rezirkulierter Luft in das Luftführungselement und an der Auslasskammer 20 einen Luftauslass 106 zum Ausstossen gemischter Luft aus dem Luftführungselement 100 auf. Die Frischluftöffnung 22 ist mit dem Frischlufteinlass 102 und die Zirkulationsöffnung 24 ist mit dem Zirkulationseinlass 104 und der Luftauslass 106 ist mit der Belüftungsöffnung 32 derart fest oder lösbar verbunden, insbesondere aneinander befestigt, dass das klimatisierte Gemisch ist im Luftführungselement 100 mischbar und im Luftführungselement 100 von der Frischluftöffnung 22 über den Frischlufteinlass 102 und von der Zirkulationsöffnung 24 über den Zirkulationseinlass 104 zum Luftauslass 106 über die Belüftungsöffnung 32 in die Kabine führbar. Die Verbindungsstellen können abgedichtet sein. Das in Figur 2 gezeigte Luftführungselement 100 umfasst zwei Einlasskammern 18 mit jeweils einem Zirkulationseinlass 104, eine Klimakammer 16 mit einem Frischlufteinlass 102, einem Klimaauslass 120 und einem Klimaeinlass 122 und zwei Auslasskammern 20 mit jeweils drei Luftauslässen 106. An, insbesondere in, einer Ausnehmung in der Klimakammer 16 ist die Klimaanlagen-Baugruppe 30 angeordnet. Figur 2 zeigt ein transparentes Luftführungselement 100, sodass die Strömungsrichtung der Luft innerhalb des Luftführungselements 100 wie folgt beschrieben werden kann. Die Frischluft und die rezirkulierte Luft sind mit den zwei zweiten Gebläse 28 ansaugbar, im Luftführungselement 100 mischbar und im abgedichteten Bereich zur Klimakammer 16 führbar. Die mittels der Klimaanlagen-Baugruppe 30 klimatisierte Luft ist ausserdem von der Klimakammer 16 aus mittels der zweiten Gebläse 28 in die Auslasskammer 20 und über die Luftauslässe 106 und die Belüftungsöffnungen 38 in die Kabine führbar.

Figur 3 zeigt eine schematische Darstellung der erfindungsgemässen Dachstruktur gemäss Figur 2. Das in Figur 3 gezeigte Luftführungselement 100 entspricht dem in Figur 2 transparent dargestellten Luftführungselement 100, weshalb im Folgenden lediglich auf die Unterschiede eingegangen wird. Das Luftführungselement 100 umfasst zwei Einlasskammern 18, eine Klimakammer 16 und zwei Auslasskammern 20, und ist in der unteren Dachbaugruppe 12 angeordnet. Das Luftführungselement 100 ist aus einem Schaum aus Kunststoff ausgebildet.

Figur 4 zeigt eine perspektivische Darstellung eines dritten Ausführungsbeispiels einer erfindungsgemässen Dachstruktur 10, im Speziellen die untere Dachbaugruppe 12 mit einer Filteranordnung 300. Die in Figur 4 gezeigte Dachstruktur 10 entspricht im Wesentlichen der in den Figuren 1 bis 3 gezeigten Dachstruktur 10, sodass im Folgenden lediglich auf die Unterschiede eingegangen wird. Die Filteranordnung 300 umfasst eine Leitung 308, ein erstes Filterelement 302, insbesondere mit einem Filter, eine Halterung 304 mit einem Befestigungselement, ein erstes Gebläse 306 und ein Kopplungselement 310. Die Leitung 308 ist mit dem Kopplungselement 310 verbunden, insbesondere am Kopplungselement 310 befestigt, sodass diese strömungsverbunden sind. Das Kopplungselement 310 ist mit dem Frischlufteinlass 22 der unteren Dachbaugruppe 12 lösbar verbunden bzw. an diesem befestigt, kann aber auch fest verbunden bzw. befestigt sein. Die in Figur 4 gezeigte Filteranordnung ist insbesondere mit jeder der in den Figuren 1 bis 3 gezeigten Dachstruktur 10 verbindbar, insbesondere der unteren Dachbaugruppe 12 oder dem Luftführungselement 100.

Figur 5 zeigt eine perspektivische Darstellung des Kopplungselements 310. Das in Figur 5 gezeigte Kopplungselement 310 entspricht im Wesentlichen dem in Figur 4 gezeigten Kopplungselement 310, sodass im Folgenden lediglich auf die Unterschiede eingegangen wird. Das Kopplungselement 310 ist mittels einer Befestigungseinrichtung, hier ein Kopplungsflansch 316, an der unteren Dachbaugruppe befestigbar. Die Leitung 308 ist über einen Anschlussstutzen 314 am Kopplungselement 310 anschliessbar.

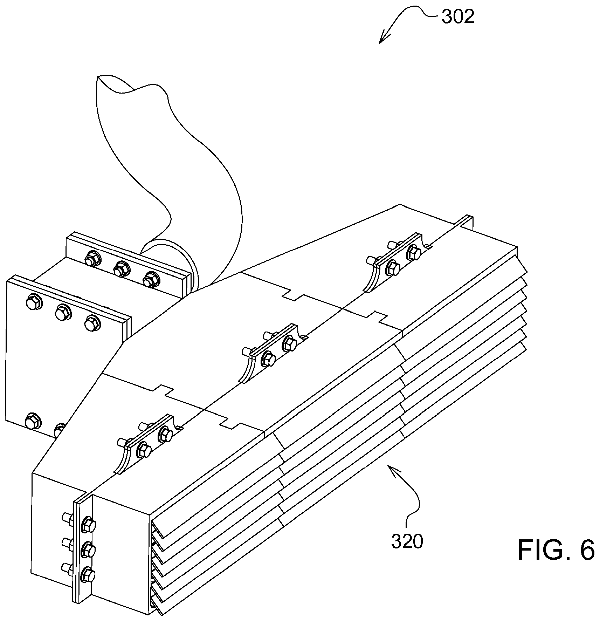

Figur 6 zeigt eine perspektivische Darstellung eines ersten Filterelements 302. Das erste Filterelement 302 weist eine gegenüber den bekannten ersten Filterelementen 302 vergrösserte Frontfläche 320 auf. Dadurch erhöht sich der Volumenstrom in die Kabine 200 und dadurch der Druck in der Dachstruktur 10 und/oder der Kabine 200.

## Patentansprüche

1. Dachstruktur für ein landwirtschaftliches Fahrzeug, umfassend eine obere Dachbaugruppe (14) und eine untere Dachbaugruppe (12), wobei die obere Dachbaugruppe (14) mit der unteren Dachbaugruppe (12) verbindbar ist, und die untere Dachbaugruppe (12) und/oder die obere Dachbaugruppe (14) eine Belüftungsöffnung (32) zur Führung von klimatisierter Luft und eine Zirkulationsöffnung (24) zur Zufuhr von rezirkulierter Luft umfassen,
die untere Dachbaugruppe (12) und/oder die obere Dachbaugruppe (14) eine Frischluftöffnung (22) zur Zufuhr von Frischluft umfassen
**dadurch gekennzeichnet, dass**
die Dachstruktur (10) ein Luftführungselement (100) umfasst, wobei das Luftführungselement (100) als ein geschlossener Kanal oder als ein röhrenförmiger Körper ausgebildet ist, und das Luftführungselement (100) derart zwischen der unteren und oberen Dachbaugruppe (12, 14) und an der Frischluftöffnung (22) und an der Zirkulationsöffnung (24) und an der Belüftungsöffnung (32) angeordnet ist, dass das Luftführungselement (100) als ein gegenüber einer Außenumgebung abgedichteter Bereich ausgebildet ist.

2. Dachstruktur nach Anspruch 1, **dadurch gekennzeichnet, dass** das Luftführungselement (100) eine Klimakammer (16) und eine Einlasskammer (18) und eine Auslasskammer (20) umfasst, wobei die Klimakammer (16) zwischen der Einlasskammer (18) und der Auslasskammer (20) angeordnet ist und die Einlasskammer (18) und die Auslasskammer (20) als voneinander getrennte Kammern ausgebildet sind.

3. Dachstruktur nach mindestens einem der vorangehenden Ansprüche, **dadurch gekennzeichnet, dass** das Luftführungselement (100) an der Einlasskammer (18) und/oder der Klimakammer (16) einen Frischlufteinlass (102) zur Zufuhr von Frischluft in das Luftführungselement (100) und einen Zirkulationseinlass (104) zur Zufuhr von rezirkulierter Luft in das Luftführungselement (100) und an der Auslasskammer (20) einen Luftauslass (106) zum Ausstossen klimatisierter gemischter Luft aus dem Luftführungselement (100) aufweist, und die Frischluftöffnung (22) mit dem Frischlufteinlass (102) und die Zirkulationsöffnung (24) mit dem Zirkulationseinlass (104) und der Luftauslass (106) mit der Belüftungsöffnung (32) derart verbunden sind, dass die Frischluft und die rezirkulierte Luft im Luftführungselement (100) mischbar und im Luftführungselement (100) von der Frischluftöffnung (22) und der Zirkulationsöffnung (24) zum Luftauslass (106) führbar sind.

4. Dachstruktur nach mindestens einem der vorangehenden Ansprüche, **dadurch gekennzeichnet, dass** an der Frischluftöffnung (22) und/oder am Frischlufteinlass (102) eine Filteranordnung (300), insbesondere mit einem ersten Filterelement (302) und/oder einem ersten Gebläse (306), angeordnet ist.

5. Dachstruktur nach mindestens einem der vorangehenden Ansprüche, **dadurch gekennzeichnet, dass** das Luftführungselement (100) aus einem Kunststoff ist.

6. Dachstruktur nach mindestens einem der vorangehenden Ansprüche, **dadurch gekennzeichnet, dass** an der Zirkulationsöffnung (24) und/oder am Zirkulationseinlass (104) ein zweites Filterelement (110) entfernbar angeordnet ist.

7. Dachstruktur nach mindestens einem der vorangehenden Ansprüche, **dadurch gekennzeichnet, dass** die Filteranordnung (300) und das Luftführungselement (100) oder die Filteranordnung (300) und die Dachstruktur (10) mittels eines Kopplungselements (310) verbunden sind.

8. Dachstruktur nach mindestens einem der vorangehenden Ansprüche, **dadurch gekennzeichnet, dass** das Luftführungselement (100) einen Kabelkanal (112) umfasst.

9. Dachstruktur nach mindestens einem der vorangehenden Ansprüche, **dadurch gekennzeichnet, dass** in der Klimakammer (16) und/oder in der Auslasskammer (20) ein zweites Gebläse (28) anordenbar ist und/oder an der Klimakammer (16) und/oder an der Auslasskammer (20) eine Klimaanlagen-Baugruppe (30) anordenbar ist.

10. Dachstruktur nach Anspruch 9, **dadurch gekennzeichnet, dass** das zweite Gebläse (28) einen zweiten Gebläseeinlass und einen zweiten Gebläseauslass aufweist, wobei der zweite Gebläseeinlass Luft aus der Klimakammer (16) ansaugt und/oder der zweite Gebläseauslass Luft in die Auslasskammer (20) ausstößt.

11. Kabine für ein landwirtschaftliches Fahrzeug, umfassend eine Dachstruktur (10) nach mindestens einem der Ansprüche 1 bis 10.

12. Kabine nach Anspruch 11, **dadurch gekennzeichnet, dass** die Kabine (200) mindestens eine Seitenwand (202) und die Dachstruktur (10) mit einer Filteranordnung (300) umfasst.

## Claims

1. Roof structure for an agricultural vehicle, comprising an upper roof assembly (14) and a lower roof assembly (12), wherein the upper roof assembly (14) is connectable to the lower roof assembly (12), and the lower roof assembly (12) and/or the upper roof assembly (14) comprise a ventilation opening (32) for guiding air-conditioned air and a circulation opening (24) for supplying recirculated air, the lower roof assembly (12) and/or the upper roof assembly (14) comprise a fresh-air opening (22) for supplying fresh air,
**characterized in that**
the roof structure (10) comprises an air-guiding element (100), wherein the air-guiding element (100) is configured as a closed duct or as a tubular body, and the air-guiding element (100) is arranged between the lower and upper roof assembly (12, 14) and at the fresh-air opening (22) and at the circulation opening (24) and at the ventilation opening (32) such that the air-guiding element (100) is formed as a region that is sealed off from an external environment.

2. Roof structure according to Claim 1, **characterized in that** the air-guiding element (100) comprises an air-conditioning chamber (16) and an inlet chamber (18) and an outlet chamber (20), wherein the air-conditioning chamber (16) is arranged between the inlet chamber (18) and the outlet chamber (20), and the inlet chamber (18) and the outlet chamber (20) are configured as chambers that are separated from one another.

3. Roof structure according to at least one of the preceding claims, **characterized in that** the air-guiding element (100) has, at the inlet chamber (18) and/or the air-conditioning chamber (16), a fresh-air inlet (102) for supplying fresh air into the air-guiding element (100) and a circulation inlet (104) for supplying recirculated air into the air-guiding element (100) and has, at the outlet chamber (20), an air outlet (106) for discharging air-conditioned mixed air from the air-guiding element (100), and the fresh-air opening (22) is connected to the fresh-air inlet (102) and the circulation opening (24) to the circulation inlet (104) and the air outlet (106) to the ventilation opening (32) such that the fresh air and the recirculated air are able to be mixed in the air-guiding element (100) and are able to be guided in the air-guiding element (100) from the fresh-air opening (22) and the circulation opening (24) to the air outlet (106).

4. Roof structure according to at least one of the preceding claims, **characterized in that** a filter arrangement (300), in particular having a first filter element (302) and/or a first fan (306), is arranged at the fresh-air opening (22) and/or at the fresh-air inlet (102).

5. Roof structure according to at least one of the preceding claims, **characterized in that** the air-guiding element (100) is made from a plastic.

6. Roof structure according to at least one of the preceding claims, **characterized in that** a second filter element (110) is arranged in a removable manner at the circulation opening (24) and/or at the circulation inlet (104).

7. Roof structure according to at least one of the preceding claims, **characterized in that** the filter arrangement (300) and the air-guiding element (100) or the filter arrangement (300) and the roof structure (10) are connected by means of a coupling element (310).

8. Roof structure according to at least one of the preceding claims, **characterized in that** the air-guiding element (100) comprises a cable duct (112).

9. Roof structure according to at least one of the preceding claims, **characterized in that** a second fan (28) is arrangeable in the air-conditioning chamber (16) and/or in the outlet chamber (20), and/or an air-conditioning system assembly (30) is arrangeable at the air-conditioning chamber (16) and/or at the outlet chamber (20).

10. Roof structure according to Claim 9, **characterized in that** the second fan (28) has a second fan inlet and a second fan outlet, wherein the second fan inlet sucks up air from the air-conditioning chamber (16) and/or the second fan outlet discharges air into the outlet chamber (20).

11. Cab for an agricultural vehicle, comprising a roof structure (10) according to at least one of Claims 1 to 10.

12. Cab according to Claim 11, **characterized in that** the cab (200) comprises at least one side wall (202) and the roof structure (10) having a filter arrangement (300) .

## Revendications

1. Structure de toit pour un véhicule agricole, comportant un ensemble de toit supérieur (14) et un ensemble de toit inférieur (12), l'ensemble de toit supérieur (14) pouvant être relié à l'ensemble de toit inférieur (12), et l'ensemble de toit inférieur (12) et/ou l'ensemble de toit supérieur (14) comportant une ouverture de ventilation (32) servant au guidage d'air climatisé et une ouverture de circulation (24) servant à l'amenée d'air recirculé,
l'ensemble de toit inférieur (12) et/ou l'ensemble de toit supérieur (14) comportant une ouverture d'air frais (22) servant à l'amenée d'air frais,
**caractérisée en ce que**
la structure de toit (10) comporte un élément de guidage d'air (100), l'élément de guidage d'air (100) étant réalisé sous la forme d'un canal fermé ou sous la forme d'un corps tubulaire, et l'élément de guidage d'air (100) étant agencé entre les ensembles de toit inférieur et supérieur (12, 14) et au niveau de l'ouverture d'air frais (22) et au niveau de l'ouverture de circulation (24) et au niveau de l'ouverture de ventilation (32), de telle sorte que l'élément de guidage d'air (100) est réalisé sous la forme d'une région étanchéifiée par rapport à un environnement extérieur.

2. Structure de toit selon la revendication 1, **caractérisée en ce que** l'élément de guidage d'air (100) comporte une chambre climatisée (16) et une chambre d'entrée (18) et une chambre de sortie (20), la chambre climatisée (16) étant agencée entre la chambre d'entrée (18) et la chambre de sortie (20) et la chambre d'entrée (18) et la chambre de sortie (20) étant réalisées sous la forme de chambres séparées l'une de l'autre.

3. Structure de toit selon au moins l'une des revendications précédentes, **caractérisée en ce que** l'élément de guidage d'air (100) comprend, au niveau de la chambre d'entrée (18) et/ou de la chambre climatisée (16), une entrée d'air frais (102) pour l'amenée d'air frais dans l'élément de guidage d'air (100) et une entrée de circulation (104) pour l'amenée d'air recirculé dans l'élément de guidage d'air (100) et, au niveau de la chambre de sortie (20), une sortie d'air (106) servant à l'évacuation d'air mélangé climatisé hors de l'élément de guidage d'air (100), et l'ouverture d'air frais (22) étant reliée à l'entrée d'air frais (102) et l'ouverture de circulation (24) étant reliée à l'entrée de circulation (104) et la sortie d'air (106) étant reliée à l'ouverture de ventilation (32), de telle sorte que l'air frais et l'air recirculé peuvent être mélangés dans l'élément de guidage d'air (100) et peuvent être guidés dans l'élément de guidage d'air (100) à partir de l'ouverture d'air frais (22) et de l'ouverture de circulation (24) jusqu'à la sortie d'air (106).

4. Structure de toit selon au moins l'une des revendications précédentes, **caractérisée en ce qu'**un agencement filtrant (300), en particulier comportant un premier élément filtrant (302) et/ou un premier ventilateur (306), est agencé au niveau de l'ouverture d'air frais (22) et/ou au niveau de l'entrée d'air frais (102) .

5. Structure de toit selon au moins l'une des revendications précédentes, **caractérisée en ce que** l'élément de guidage d'air (100) est constitué d'une matière synthétique.

6. Structure de toit selon au moins l'une des revendications précédentes, **caractérisée en ce qu'**un deuxième élément filtrant (110) est agencé de manière amovible au niveau de l'ouverture de circulation (24) et/ou au niveau de l'entrée de circulation (104).

7. Structure de toit selon au moins l'une des revendications précédentes, **caractérisée en ce que** l'agencement filtrant (300) et l'élément de guidage d'air (100) ou l'agencement filtrant (300) et la structure de toit (10) sont reliés au moyen d'un élément d'accouplement (310).

8. Structure de toit selon au moins l'une des revendications précédentes, **caractérisée en ce que** l'élément de guidage d'air (100) comporte un passage de câbles (112).

9. Structure de toit selon au moins l'une des revendications précédentes, **caractérisée en ce qu'**un deuxième ventilateur (28) peut être agencé dans la chambre climatisée (16) et/ou dans la chambre de sortie (20) et/ou **en ce qu'**un ensemble de système de climatisation (30) peut être agencé au niveau de la chambre climatisée (16) et/ou au niveau de la chambre de sortie (20).

10. Structure de toit selon la revendication 9, **caractérisée en ce que** le deuxième ventilateur (28) comprend une deuxième entrée de ventilateur et une deuxième sortie de ventilateur, la deuxième entrée de ventilateur aspirant de l'air hors de la chambre climatisée (16) et/ou la deuxième sortie de ventilateur évacuant de l'air dans la chambre de sortie (20).

11. Cabine pour un véhicule agricole, comportant une structure de toit (10) selon au moins l'une des revendications 1 à 10.

12. Cabine selon la revendication 11, **caractérisée en ce que** la cabine (200) comporte au moins une paroi latérale (202) et la structure de toit (10) comportant un agencement filtrant (300).
